Europäisches Patentamt

European Patent Office

Office européen des brevets

(19)

(11) EP 1 491 885 A1

(12) **EUROPEAN PATENT APPLICATION**
published in accordance with Art. 158(3) EPC

(43) Date of publication:
29.12.2004 Bulletin 2004/53

(51) Int Cl.7: **G01N 27/416**

(21) Application number: 03745897.3

(86) International application number:
**PCT/JP2003/004273**

(22) Date of filing: 03.04.2003

(87) International publication number:
**WO 2003/085393 (16.10.2003 Gazette 2003/42)**

(84) Designated Contracting States:
**AT BE BG CH CY CZ DE DK EE ES FI FR GB GR HU IE IT LI LU MC NL PT RO SE SI SK TR**

(30) Priority: 04.04.2002 JP 2002102110

(71) Applicants:
• **Ricoh Kyosan Inc.**
**Chuo-ku, Tokyo 104-0028 (JP)**
• **The Circle for the Promotion of Science and Engineering**
**Tokyo 152-8550 (JP)**

(72) Inventors:
• **KARNOOD, Tsogt c/o Ricoh Kyosan Inc.**
**Chuo-ku, Tokyo 104-0028 (JP)**

• **OHSAKA,Takeo**
**Graduate School of Sc. & Engineering**
**Yokohama-shi, Kanagawa 226-8502 (JP)**
• **AWAD,Mohamed I**
**Graduate School of Sc.& Engineering**
**Yokohama-shi, Kanagawa 226-8502 (JP)**

(74) Representative: **Paget, Hugh Charles Edward**
**Mewburn Ellis LLP**
**York House**
**23 Kingsway**
**London WC2B 6HP (GB)**

(54) **METHOD OF SIMULTANEOUS FRACTIONAL ANALYSIS OF PERACETIC ACID AND HYDROGEN PEROXIDE**

(57) The invention is a method for simultaneous and fractional determination of peracetic acid and hydrogen peroxide, which comprises adding a solution containing peracetic acid and hydrogen peroxide to a pH buffer solution with pH from 5 to 6 containing a molybdate, iodine and an iodide ion, and measuring redox potential changes in a reaction of peracetic acid with the iodide ion and a reaction of hydrogen peroxide with the iodide ion, and the concentrations of peracetic acid and hydrogen peroxide in the mixture of peracetic acid and hydrogen peroxide can fractionally be measured with ease continuously and simultaneously.

Fig. 3

EP 1 491 885 A1

## Description

Technical Field

The present invention relates to a method for fractional determination of concentrations of peracetic acid and hydrogen peroxide by measuring redox potentials in a reaction of a mixture of peracetic acid and hydrogen peroxide with an iodide ion. More specifically, it relates to a method for simultaneous and fractional determination of concentrations of peracetic acid and hydrogen peroxide by fractional measurement of redox potentials in a reaction of a mixture of peracetic acid and hydrogen peroxide with an iodide ion in a pH buffer solution containing a molybdate, iodine and the iodide ion.

Background Art

Peracetic acid has found wide acceptance in medical and food industries as a bactericide. Peracetic acid is by far better in bactericidal activity than hydrogen peroxide which has long been used as a bactericide. Further, peracetic acid is by far lower in burden exerted on a material of a machine and natural environment than sodium hypochlorite which has been so far known as a bactericide. In foreign countries, especially in the U. S., peracetic acid has been often used as a bactericide to replace sodium hypochlorite. In recent years, peracetic acid has been used also in Japan as a bactericide, and its use amount has been rapidly increased year by year.

Since peracetic acid as a bactericide is usually synthesized from hydrogen peroxide and acetic acid, commercially available peracetic acid is a mixed aqueous solution of peracetic acid, hydrogen peroxide, acetic acid and the like. It is important to measure a concentration of peracetic acid which is in the form of such a mixed aqueous solution. The concentration of peracetic acid is measured by a batchwise analytical method such as an iodine titration method (JP-A-6-130051), a spectroscopic method or a conductometric method (JP-T-6-503162 (the term "JP-T" as used herein means a published Japanese translation of a PCT patent application), JP-UM-T-6-7057, JP-A-9-127053 and the like). In the batchwise analytical method, it is difficult to measure a concentration in situ instantaneously and continuously. In the ordinary conductometric method, total electroconductivity of a mixed aqueous solution containing peracetic acid is examined, and it is therefore impossible to fractionally measure actual concentrations of peracetic acid, hydrogen peroxide and the like contained in a solution. Accordingly, the ordinary analytical methods are not satisfactory enough to measure concentrations of peracetic acid, hydrogen peroxide and the like exactly and adequately.

Accordingly, the invention aims to provide a method for fractionally measuring concentrations of peracetic acid and hydrogen peroxide in a mixture of peracetic acid and hydrogen peroxide instantaneously, continuously and simultaneously using the fact that a reaction rate of peracetic acid with an iodide ion is different from a reaction rate of hydrogen peroxide with an iodide ion.

In a reaction of peracetic acid and an iodide ion and a reaction of hydrogen peroxide and an iodide ion, the reaction rate is high in peracetic acid and low in hydrogen peroxide. However, there is a portion in which the reactions take place simultaneously. Thus, it is impossible to fractionally determine concentrations of peracetic acid and hydrogen peroxide. Further, the reaction of hydrogen peroxide and the iodide ion is slow, and it takes much time to reach equilibrium. Accordingly, the reaction has been problematic when used in the analysis.

Disclosure of the Invention

For solving the foregoing problems, the present inventors have studied the reactivity of peracetic acid and hydrogen peroxide with the iodide ion in the presence of a molybdate, and have consequently found that in a specific pH range, a portion in which a reaction of peracetic acid and an iodide ion and a reaction of hydrogen peroxide and an iodide ion take place overlappingly is decreased and a reaction of hydrogen peroxide and an iodide ion reaches equilibrium in a relatively short time, and that redox potential changes in a reaction of peracetic acid and an iodide ion and a reaction of hydrogen peroxide and an iodide ion are measured, whereby fractional determinations of the respective compounds can be performed in a short time. These findings have led to the completion of the invention.

That is, the invention is a method for simultaneous and fractional determination of peracetic acid and hydrogen peroxide, which comprises adding a solution containing peracetic acid and hydrogen peroxide to a pH buffer solution with pH of from 5 to 6 containing a molybdate, iodine and an iodide ion, and measuring redox potential changes in a reaction of peracetic acid and the iodide ion and a reaction of hydrogen peroxide and the iodide ion. Further, the invention is the method for simultaneous and fractional determination of peracetic acid and hydrogen peroxide, wherein the concentration of the molybdate is from 0.5 to 1 mmol/l, the concentration of iodine is from 0.3 to 2 mmol/l, the concentration of the iodide ion is from 5 to 20 mmol/l, and redox potential changes are measured using a potentiometer having a working electrode made of platinum, gold or carbon.

Brief Description of the Drawings

Fig. 1 is an example of a cross-sectional drawing of a working electrode used in the invention. 1 is a working electrode, 2 a conductive metallic rod, 3 a conductive paste, 4 an electrode, and 5 a resin rod.

Fig. 2 is a graph showing a change with time of electrode potentials measured in Examples 1 and 2.

Fig. 3 is a graph in which an integrated value of an electrode potential change measured in Example 1 is plotted as a function of a concentration of peracetic acid (PAA) or hydrogen peroxide ($H_2O_2$).

Best Mode for Carrying Out the Invention

The method for simultaneous and fractional determination of peracetic acid and hydrogen peroxide in the invention comprises adding a solution containing peracetic acid and hydrogen peroxide to a predetermined pH buffer solution containing a molybdate, iodine and an iodide ion, and measuring redox potential changes (of the iodide ion and iodine) in a reaction of peracetic acid with the iodide ion and a reaction of hydrogen peroxide with the iodide ion.

The invention is described in detail below.

In the invention, the pH of the pH buffer solution is from 5 to 6. When the pH is less than 5, peracetic acid and hydrogen peroxide are reacted with the iodide ion partially overlappingly, which is disadvantageous to fractionally determine peracetic acid and hydrogen peroxide. When the pH exceeds 6, it takes much time to reach equilibrium in the reaction of hydrogen peroxide with the iodide ion. When the pH is in the range of from 5 to 6, the portion in which the reactions take place overlappingly is decreased, and a time in which the reaction reaches equilibrium is relatively short, making it possible to perform fractional determination for a substantially short period of time. Incidentally, in the present specification, the fact that the portion in which the reaction of peracetic acid with the iodide ion and the reaction of hydrogen peroxide with the iodide ion take place overlappingly is decreased to enable the fractional determination indicates that selectivity is good, and the fact that the reactions take place partially overlappingly to make difficult the fractional determination indicates that selectivity is decreased.

The pH buffer solution with pH of from 5 to 6 may be formed by any method. However, since the reaction of peracetic acid or hydrogen peroxide with the iodide ion allows formation of acetic acid and water, an acetate buffer solution is preferable.

In the invention, the molybdate in the pH buffer solution acts as a catalyst for increasing the reaction rate of hydrogen peroxide and iodide ion. The reaction rate of hydrogen peroxide and the iodide ion is relatively low, and it takes time to reach equilibrium, and considerable time is required for determination. The addition of the molybdate to the pH buffer solution increases the reaction rate of hydrogen peroxide and iodide ion to enable the measurement in a short period of time.

The molybdate used includes sodium molybdate, potassium molybdate, calcium molybdate and ammonium molybdate. In view of stability in the solution, ammonium molybdate is preferable.

The concentration of the molybdate in the buffer solution is preferably from 0.5 to 1 mmol/l. In this range, the reaction of hydrogen peroxide with iodide ion is accelerated without hindrance of it, and the reaction of peracetic acid with iodide ion is not hindered, nor is the reaction rate thereof influenced. When the concentration of the molybdate is less than 0.5 mmol/l, the reaction rate of hydrogen peroxide with iodide ion is not satisfactory. When it exceeds 1 mmol/ l, the molybdate is hardly dissolved in the solution. In the invention, the unit mM of the concentration indicates mmol/ l unless otherwise instructed.

The molybdate may be added to the buffer solution from the beginning or after the completion of the reaction of peracetic acid during the analysis.

The ion source of the iodide ion used in the invention is not limited at all so long as it forms iodide ion in the pH buffer solution. Potassium iodide which is commonly used in iodometry is preferable because a high-purity compound can be available and is stable in the solution. The concentration of the iodide ion is preferably from 5 to 20 mM. When the concentration of the iodide ion is less than 5 mM, the redox potential in the initial concentration (before charging a sample) is not stable. When the concentration of the iodide ion exceeds 20 mM, the redox potential change becomes smaller than the actual reaction amount of hydrogen peroxide or peracetic acid with iodide ion in some concentrations of hydrogen peroxide and peracetic acid in a sample to lower sensitivity and decrease selectivity.

The concentration of iodine in the buffer solution used in the invention is preferably from 0.3 to 2 mM. When the concentration of iodine is less than 0.3 mM, the redox potential in the initial concentration (before charging a sample) is not stable. When the concentration of iodine exceeds 2 mM, the redox potential change becomes smaller than the actual reaction amount of hydrogen peroxide or peracetic acid with iodide ion depending on the concentrations of hydrogen peroxide and peracetic acid in a sample to lower sensitivity and decrease selectivity.

A method for preparing a pH buffer solution with pH of from 5 to 6 containing known concentrations of iodine and the iodide ion is not particularly limited so long as iodine and iodide ion in the buffer solution can be equilibrated. For example, an equilibrium solution of known concentrations of iodide ions and iodine can be prepared by dissolving a predetermined amount of potassium iodide in a pH buffer solution with pH from 5 to 6 and adding a known concentration of peracetic acid thereto to oxidize a part of iodide ions. Further, a fixed amount of iodine can be formed by dissolving a predetermined amount of potassium iodide in a pH buffer solution with pH of from 5 to 6 and performing potentiostatic electrolysis while applying a known potential. Thus, an equilibrium solution of known concentrations of iodide ions and iodine can be prepared. Subsequently, a predetermined amount of a molybdate is added, and a pH buffer solution with pH from 5 to 6 containing a molybdate and known concentrations of iodine and iodide ions can be prepared.

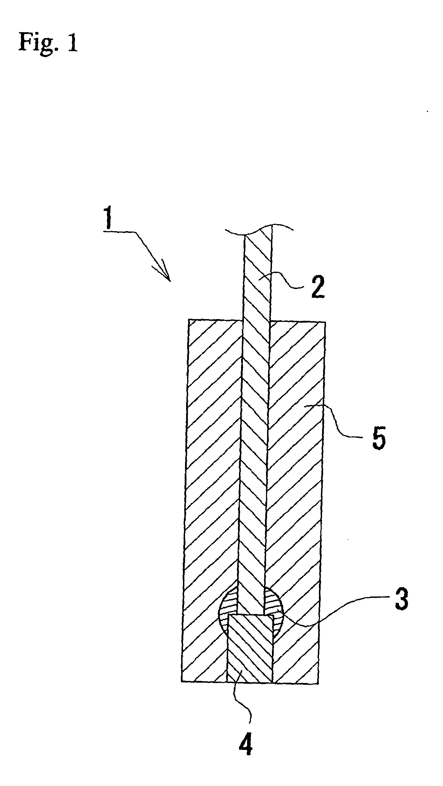

Aworking electrode, a platinumwire as a counter electrode andAg/AgCl (NaCl saturation) as a reference electrode are dipped in the pH buffer solution with pH from 5 to 6 containing a molybdate and known concentrations of iodine and an iodide ion, which is prepared by the foregoing method. A sample solution containing peracetic acid andhydrogen peroxide is added thereto to measure electrode potentials. Concentrations of peracetic acid and hydrogen peroxide are estimated from the electrode potential change (redox potential change) using calibration curves previously obtained. A glassy carbon electrode, a platinum electrode or a gold electrode prepared in Example 1 as shown in Fig. 1 is preferably used as an example of the working electrode. It is preferable that the measurement is conducted under stirring with a stirring unit such as a stirrer bar for uniformly conducting a redox reaction. It may be conducted in a nitrogen atmosphere or in an air atmosphere.

With respect to the measurement of the redox potential in the invention, a working electrode and a reference electrode such as a silver/silver chloride (potassium chloride saturated solution) or calomel electrode having a known standard potential are set in a measuring solution, and a potential of the working electrode relative to the reference electrode is measured with a potentiostat or an electrometer. A redox potential can also be measured by a potential measuring device of a three-electrode system having a working electrode, a counter electrode and a reference electrode. Regarding measurement precision of a potential measuring device, it is advisable that a potential of 100 $\mu$V, preferably a potential of 10 $\mu$V can be detected.

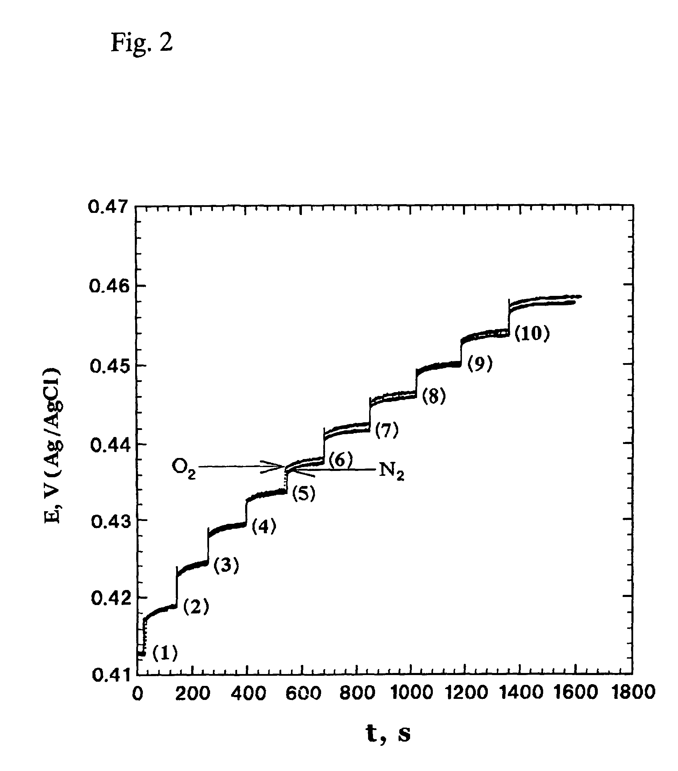

Fig. 2 shows a change with time of electrode potentials (redox potentials) measured at room temperature (25°C $\pm$ 1°C) at times (1), (2), (3), (4), (5), (6), (7), (8), (9) and (10) by addition of a sample solution containing different known concentrations of peracetic acid and hydrogen peroxide. Immediately after the addition of the sample solution, the instantaneous electrode potential change depending on the fast reaction of the iodide ion and peracetic acid and the moderate electrode potential change depending on the subsequent reaction of iodide ion and hydrogen peroxide are obtained.

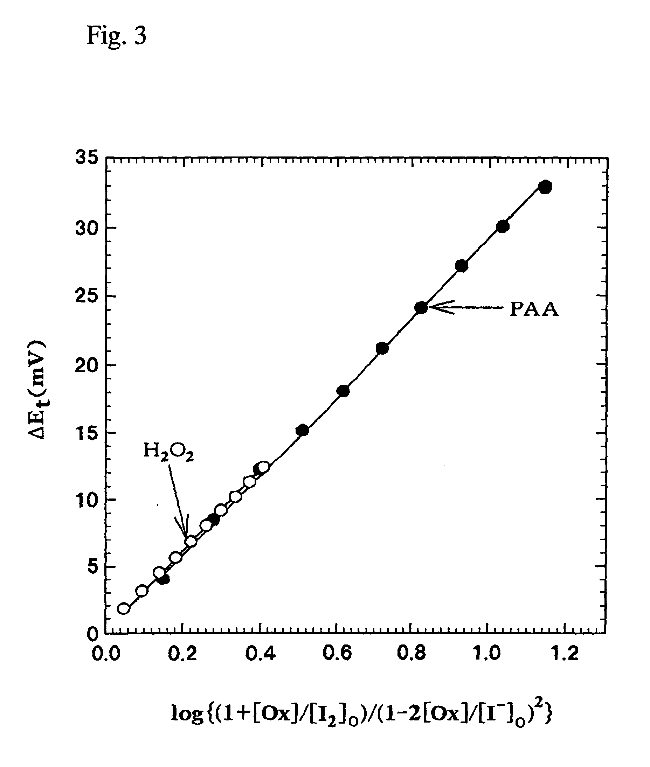

The integrated value ($\Delta E_1$) of each electrode potential change ($\Delta E$)is plotted as a function of the concentration of peracetic acid or hydrogen peroxide according to theoretical formula (1) (Fig. 3). Each plot is then linear, and the slope thereof nearly agrees with a theoretically expected value (29.6 mV at 25°C). In this manner, the concentrations of peracetic acid and hydrogen peroxide can be determined by measuring the electrode potentials depending on the reaction of peracetic acid with the iodide ion and the reaction of hydrogen peroxide with the iodide ion using the buffer solution with the known iodine concentration and the known iodide ion concentration.

Theoretical formula (1)

$$\Delta E = (2.303RT/2F)\log\{(1+[Ox]/[I_2]_0)/(1-2[Ox]/[I^-]_0)^2\} \quad (1)$$

wherein $\Delta E$ represents a potential change (mV), R represents a gas constant, F represents a Faraday constant, T represents a measuring temperature (absolute temperature), [Ox] represents a concentration (M) of peracetic acid or hydrogen peroxide, and $[I^-]_0$ and $[I_2]_0$ represent initial concentrations (M) of an iodide ion and iodine.

According to the method of the invention, the concentrations of peracetic acid and hydrogen peroxide in the mixed solution of peracetic acid at a concentration of from 5 $\mu$M to 4.5 mM and hydrogen peroxide at a concentration of from 2 $\mu$M to 1. 3 mM can fractionally be measured with good accuracy.

Examples

The invention is illustrated more specifically below by referring to Examples.

Example 1

[Preparation of an acetate buffer solution containing an iodide ion and iodine]

To a glass cell having a volume of 80 cc, 40 cc of a 0.05 M acetate buffer solution (pH 5.4) is charged, and potassium iodide is dissolved therein to a concentration of 13.5 mM. Subsequently, a mixed solution of peracetic acid and hydrogen peroxide is added such that the total concentration becomes 1.0 mM to oxidize the iodide ion and form 1.0 mM of iodine. The iodide ion concentration of the thus-obtainedacetate buffer solution is 11.5 mM (13.5-2x1.0).

[Production of a working electrode]

As shown in Fig. 1, a conductive metallic rod (copper rod) 2 having a diameter of 2 mm as a conductive substrate, a glassy carbon (or, platinum or gold) electrode 4 having a diameter of 3 mm and a length of 4 mm and a polyimide resin rod 5 were embedded such that the surfaces of the conductive metallic rod 2 and the glassy carbon electrode 4 and one end of the polyimide resin rod 5 were situated on approximately the same plane and the conductive metallic rod 2 was exposed from another surface of the polyimide resin 5 by approximately 5 cm. The exposed surface of the glassy carbon (or, platinum or gold) was polished with an alumina powder having a diameter of 1.0 $\mu$m and an alumina powder having a diameter of 0.06 $\mu$m, and then put in distilled water to conduct ultrasonic cleaning for 3 minutes. In this manner, the glassy carbon electrode (referred to as a working electrode (A)), the platinum electrode (referred to as a working electrode (B)) and the gold electrode (referred to as a working electrode (C)) were produced. The working electrodes (B) and (C) were further electrolyzed by potential sweeping in a 0.05 M sulfuric acid aqueous solution at a potential of from -0.2 to 1.5 V with 10 Vs$^{-1}$ relative to an Ag/AgCl (NaCl-saturated) reference electrode, and then used as working electrodes.

[Method for measuring a potential]

Aworkingelectrode, aplatinumwire (diameter 1 mm, length 10 cm) as a counter electrode and an Ag/AgCl (NaCl-saturated) reference electrode were dipped in the above-prepared acetate buffer solution, and dissolved oxygen was removed through a nitrogen gas. Then, an electrode potential of the working electrode was measured relative to the reference electrode using a potentiostat as a three-electrode electrolysis system. The measurement was conducted at room temperature (25°C $\pm$ 1°C) under stirring with a stirrer bar. For accelerating a reaction of an iodide ion with hydrogen peroxide, ammonium molybdate was added to a concentration of 0.8 mM.
Peracetic acid and hydrogen peroxide were added at (1), (2), (3), (4), (5), (6), (7), (8), (9) and (10) so as to give respective mixed solutions in which the concentrations of peracetic acid (PAA) and hydrogen peroxide (H$_2$O$_2$) were 0.275 mM and 0.085 mM, 0.55 mM and 0.17 mM, 0.825 mM and 0.25 mM, 1.10 mM and 0.34 mM, 1.375 mM and 0.42 mM, 1.65 mM and 0.50 mM, 1.92 mM and 0.59 mM, 2.20 mM and 0.68 mM, 2.47 mM and 0.76 mM, and 2.75 mM and 0.85 mM. The electrode potential change with time obtained using the working electrode (A) is shown in Fig. 2. In any of these cases, the instantaneous electrode potential change depending on the fast reaction of the iodide ion with peracetic acid and the moderate electrode potential change depending on the subsequent reaction of the iodide ion with hydrogen peroxide were obtained by the addition of the mixed solution of peracetic acid and hydrogen peroxide. An integrated value ($\Delta E_1$) of a potential change ($\Delta E$) at this time is plotted in the ordinate as a function of a concentration of peracetic acid or hydrogen peroxide according to the theoretical formula (1), and log$\{(1+[Ox]/I_2]_0)/(1-2[Ox]/[I^-]_0)^2\}$ is plotted in the abscissa. The results are shown in Fig. 3.

Theoretical formula (1)

$$\Delta E=(2.303RT/2F)\log\{(1+[Ox]/[I_2]_0)/(1-2[Ox]/[I^-]_0)^2\} \tag{1}$$

wherein $\Delta E$ represents a potential change (mV), R represents a gas constant, F represents a Faraday constant, T represents a measuring temperature (absolute temperature), [Ox] represents a concentration (M) of peracetic acid or hydrogen peroxide, and [I$^-$]$_0$ and [I$_2$]$_0$ represent initial concentrations (M) of an iodide ion and iodine.
The plot is linear, and the slope thereof is found to be 29.3 mV for peracetic acid and 30.5 mV for hydrogen peroxide, and these nearly agree with a theoretically expected value (29.6 mV at 25°C). Thus, the concentrations of peracetic acid and hydrogen peroxide can be determined by measuring electrode potential changes depending on peracetic acid and hydrogen peroxide using the acetate buffer solution in which $[I^2]_0$ and $[I^-]_0$ are known.

Example 2

Example 1 was repeated except that dissolved oxygen was not removed through a nitrogen gas and the measurement was conducted in an acetate buffer solution under air saturation. The results of measurement are shown in Fig. 2. The plot is linear, and the slope thereof is shown in Table 1. This measuring method is not influenced by oxygen.

Example 3

The measurement was conducted as in Examples 1 and 2 except that the working electrode (B) was used. The results of measurement are shown in Table 1. The plot is linear, and the slope value thereof nearly agrees with the theoretical value. The concentrations of peracetic acid and hydrogen peroxide can be determined simultaneously by this measuring method in a nitrogen atmosphere and in an air atmosphere using a platinum electrode.

Example 4

The measurement was conducted as in Examples 1 and 2 except that the working electrode(C) was used. The results of measurement are shown in Table 1. The plot is linear, and the slope value thereof nearly agrees with the theoretical value. The concentrations of peracetic acid and hydrogen peroxide can be determined simultaneously by this measuring method in a nitrogen atmosphere and in an air atmosphere using a gold electrode.

Table 1

| | Electrode | Slope (mV) | | | |
| --- | --- | --- | --- | --- | --- |
| | | Peracetic acid | | Hydrogen peroxide | |
| | | in a nitrogen atmosphere | in an air atmosphere | in a nitrogen atmosphere | in an air atmosphere |
| Ex. 1 | Glassy carbon | 29.3 | | 30.5 | |
| Ex. 2 | Glassy carbon | | 31.8 | | 32.5 |
| Ex. 3 | Platinum | 32.3 | 31.1 | 27.9 | 32.0 |
| Ex. 4 | Gold | 31.9 | 32.0 | 31.0 | 32.0 |

Example 5

[Preparation of an acetate buffer solution containing an iodide ion and iodine]

To a glass cell having a volume of 80 cc, 40 cc of a 0.05 M acetate buffer solution (pH 5.4) is charged, and potassium iodide is dissolved therein to a concentration of 11.5 mM. Subsequently, potentiostatic electrolysis is performed using a platinum electrode (area 1 $cm^2$) as a working electrode, a platinum wire as a counter electrode and an Ag/AgCl (NaCl-saturated) electrode as a reference electrode while applying a potential of 1.2 V to the working electrode, whereby an iodide ion is electrolytically oxidized to generate 1.5 mM iodine. The iodide ion concentration of the thus-obtained acetate buffer solution is 8.5 mM (11.5-2x1.5).

[Method for measuring a potential]

A working electrode (A), a platinum wire as a counter electrode and an Ag/AgCl (NaCl-saturated) reference electrode were dipped in the above-prepared acetate buffer solution, and dissolved oxygen was removed through a nitrogen gas. Then, an electrode potential of the working electrode (A) was measured relative to the reference electrode using a potentiostat manufactured by ALS/CHI as a three-electrode electrolysis system. The measurement was conducted at room temperature (25°C $\pm$ 1°C) under stirring with a stirrer bar. For accelerating a reaction of an iodide ion with hydrogen peroxide, ammonium molybdate was added to a concentration of 0.8 mM.

Peracetic acid and hydrogen peroxide were added so as to give respective mixed solutions in which the concentrations of peracetic acid and hydrogen peroxide were 0.687 mM and 0.222 mM, 1.375 mM and 0.444 mM, 2.06 mM and 0.666 mM, and 2.75 mM and 0.889 mM. In any of these cases, the instantaneous electrode potential change depending on the fast reaction of the iodide ion with peracetic acid and the moderate electrode potential change depending on the subsequent reaction of the iodide ion with hydrogen peroxide were obtained by the addition of the mixed solution of peracetic acid and hydrogen peroxide. An integrated value ($\Delta E_1$) of a potential change ($\Delta E$) at this time is plotted in the ordinate as a function of a concentration of peracetic acid or hydrogen peroxide according to the theoretical formula (1), and $\log\{(1+[Ox]/[I_2]_0)/(1-2[Ox]/[I^-]_0)^2\}$ is plotted in the abscissa. Then, the plot is linear, and the slope thereof is found to be 29.1 mV for peracetic acid and 29.3 mV for hydrogen peroxide, and these nearly agree with a theoretically expected value (29.6 mV at 25°C). Thus, the concentrations of peracetic acid and hydrogen peroxide in the mixed solution of peracetic acid and hydrogen peroxide can be determined simultaneously by this method.

Industrial Applicability

According to the invention, the concentrations of peracetic acid and hydrogen peroxide in the mixture of peracetic acid and hydrogen peroxide can fractionally be measured with ease continuously and simultaneously.

**Claims**

1. A method for simultaneous and fractional determination of peracetic acid and hydrogen peroxide, which comprises adding a solution containing peracetic acid and hydrogen peroxide to a pH buffer solution with pH from 5 to 6 containing a molybdate, iodine and an iodide ion, and measuring redox potential changes in a reaction of peracetic acid with the iodide ion and a reaction of hydrogen peroxide with the iodide ion.

2. The method for simultaneous and fractional determination of peracetic acid and hydrogen peroxide according to claim 1, wherein the concentration of the molybdate is from 0.5 to 1 mmol/l, the concentration of iodine is from 0.3 to 2 mmol/l, the concentration of the iodide ion is from 5 to 20 mmol/l, and the redox potential changes are measured using a potentiometer having a working electrode made of platinum, gold or carbon.

3. The method for simultaneous and fractional determination of peracetic acid and hydrogen peroxide according to claim 1 or 2, wherein a measuring solution containing known concentrations of an iodide ion and iodine is used which is prepared by adding an aqueous solution of known concentration (s) of peracetic acid and/or hydrogen peroxide to a pH buffer solution containing potassium iodide in a measuring container to allow a reaction with potassium iodide.

4. The method for simultaneous and fractional determination of peracetic acid and hydrogen peroxide according to claim 1 or 2, wherein a pH buffer solution containing a molybdate, iodine and an iodide ion is used which is obtained by adding a pH buffer solution containing potassium iodide to a measuring container to cause potentiostatic electrolysis and thereby generate iodine and then adding the molybdate.

**Amended claims under Art. 19.1 PCT**

1. A method for simultaneous and fractional determination of peracetic acid and hydrogen peroxide, which comprises the steps of:

    (a) adding a solution containing peracetic acid and hydrogen peroxide to a pH buffer solution with pH from 5 to 6 containing molybdate, iodine, and iodide ion, and
    (b) measuring redox potential changes in a reaction of peracetic acid with iodide ion and a reaction of hydrogen peroxide with iodide ion.

2. A method according to claim 1, wherein the concentration of molybdate is from 0.5 to 1 mmol/l.

3. A method according to claim 1 or 2, wherein the concentration of iodine is from 0.3 to 2 mmol/l.

4. A method according to any one of claims 1 to 3, wherein the concentration of iodide ion is from 5 to 20 mmol/l.

5. A method according to any one of claims 1 to 4, wherein the redox potential changes are measured using a potentiometer having a working electrode made of platinum, gold or carbon.

**6.** A method according to claim 1, wherein:

the concentration of molybdate is from 0.5 to 1 mmol/l,
the concentration of iodine is from 0.3 to 2 mmol/l,
the concentration of iodide ion is from 5 to 20 mmol/l, and
the redox potential changes are measured using a potentiometer having a working electrode made of platinum, gold or carbon.

**7.** A method according to any one of claims 1 to 6, wherein the molybdate is provided as sodium molybdate, potassium molybdate, calcium molybdate, or ammonium molybdate.

**8.** A method according to any one of claims 1 to 7, wherein the iodide ion is provided as potassium iodide.

**9.** A method according to any one of claims 1 to 8, wherein a measuring solution containing known concentrations of iodide ion and iodine is used which is prepared by adding an aqueous solution of known concentration(s) of peracetic acid and/or hydrogen peroxide to a pH buffer solution containing potassium iodide in a measuring container to allow a reaction with potassium iodide.

**10.** A method according to any one of claims 1 to 8, wherein a pH buffer solution containing molybdate, iodine and iodide ion is used which is obtained by adding a pH buffer solution containing potassium iodide to a measuring container to cause potentiostatic electrolysis and thereby generate iodine and then adding a molybdate.

Fig. 1

Fig. 2

Fig. 3

## INTERNATIONAL SEARCH REPORT

| | International application No. |
|---|---|
| | PCT/JP03/04273 |

**A. CLASSIFICATION OF SUBJECT MATTER**
    Int.Cl$^7$  G01N27/416

According to International Patent Classification (IPC) or to both national classification and IPC

**B. FIELDS SEARCHED**

Minimum documentation searched (classification system followed by classification symbols)
    Int.Cl$^7$  G01N27/26-27/49, G01N33/00-33/46

Documentation searched other than minimum documentation to the extent that such documents are included in the fields searched
    Jitsuyo Shinan Koho          1922-1996    Toroku Jitsuyo Shinan Koho    1994-2003
    Kokai Jitsuyo Shinan Koho    1971-2003    Jitsuyo Shinan Toroku Koho    1996-2003

Electronic data base consulted during the international search (name of data base and, where practicable, search terms used)
    JICST FILE(JOIS)

**C. DOCUMENTS CONSIDERED TO BE RELEVANT**

| Category* | Citation of document, with indication, where appropriate, of the relevant passages | Relevant to claim No. |
|---|---|---|
| A | Mohamed Ismail AWAD, Chokto HARNOODE, Koichi TOKUDA, Takeo OHSAKA, Simultaneous Electroanalysis of Peracetic Acid and Hydrogen Peroxide Using Square-Wave Voltammetry: Electrochemistry, 2000, Vol.68, No.11, pages 895 to 897 | 1-4 |
| A | Mohamed Ismail Awad, Chokto Harnoode, Koichi TOKUDA, Takeo OHSAKA, Simultaneous Electroanalysis of Peracetic Acid and Hydrogen Peroxide: Analytical Chemistry, 2001, Vol.73, No.8, pages 1839 to 1843 | 1-4 |
| A | Mohamed Ismail Awad, Chokto Harnoode, Takeyoshi OKAJIMA, Koichi TOKUDA, Takeo OHSAKA, Simultaneous Electroanalysis of Peracetic Acid and Hydrogen Peroxide: The Electrochemical Society of Japan Dai 68 Kai Taikai Koen Yoshishu, 2001, 68th, page 329 | 1-4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 April, 2003 (24.04.03) | 13 May, 2003 (13.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/04273 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Mohamed Ismail AWAD, Chokto HARNOODE, T. OKAJIMA, Koichi TOKUDA, Takeo OHSAKA, Simultaneous Electroanalysis of Peracetic Acid and Hydrogen Peroxide: Chemical Sensors 2001, Vol.17, Supplement A, pages 109 to 111 | 1-4 |
| A | JP 2001-13102 A (Riko Kyosan Kabushiki Kaisha), 19 January, 2001 (19.01.01), Full text; Figs. 1 to 6 (Family: none) | 1-4 |

Form PCT/ISA/210 (continuation of second sheet) (July 1998)